(19) Europäisches Patentamt
European Patent Office
Office européen des brevets

(11) EP 2 176 332 B1

(12) **EUROPEAN PATENT SPECIFICATION**

(45) Date of publication and mention of the grant of the patent:
**29.06.2011 Bulletin 2011/26**

(21) Application number: **08797162.8**

(22) Date of filing: **05.08.2008**

(51) Int Cl.:
***C08K 5/00*** *(2006.01)* ***C08K 5/42*** *(2006.01)*
***C08K 5/19*** *(2006.01)* ***C08K 5/34*** *(2006.01)*
***C08K 5/50*** *(2006.01)* ***C08L 67/02*** *(2006.01)*

(86) International application number:
**PCT/US2008/072174**

(87) International publication number:
**WO 2009/020946 (12.02.2009 Gazette 2009/07)**

(54) **FLAME RETARDANT POLYTRIMETHYLENE TEREPHTHALATE COMPOSITION**

FLAMMHEMMENDE POLYTRIMETHYLENTEREPHTHALATZUSAMMENSETZUNG

COMPOSITION IGNIFUGE À BASE DE POLYTRIMÉTHYLÈNE TÉRÉPHTALATE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **06.08.2007 US 834279**

(43) Date of publication of application:
**21.04.2010 Bulletin 2010/16**

(73) Proprietor: **E. I. du Pont de Nemours and Company**
**Wilmington, DE 19898 (US)**

(72) Inventors:
- **CHANG, Jing, Chung**
  **Boothwyn, Pennsylvania 19061 (US)**
- **JUNK, Christopher, P.**
  **Wilmington, Delaware 19806 (US)**
- **LIANG, Yuanfeng**
  **Chadds Ford, Pennsylvania 19317 (US)**
- **MCKEOWN, Joseph, P.**
  **Wilmington, Delaware 19803 (US)**
- **PAGE, Matthew, Arthur**
  **Wilmington, Delaware 19803 (US)**

(74) Representative: **Hirsch, Marc-Roger**
**Hirsch & Associés**
**58, Avenue Marceau**
**75008 Paris (FR)**

(56) References cited:
**EP-A- 1 462 503** **EP-A- 1 630 203**
**WO-A-2004/035672**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 176 332 B1

Printed by Jouve, 75001 PARIS (FR)

## Description

### CROSS-REFERENCE TO RELATED APPLICATIONS

This application is related to commonly owned U.S. Application Serial No. 11/834,232, filed August 6, 2007, entitled "FLAME RETARDANT POLYTRIMETHYLENE TEREPHTHALATE COMPOSITION" (Internal Reference CL3587); commonly owned U.S. Application Serial No. 11/834,248, filed August 6, 2007, entitled "FLAME RETARDANT POLYTRIMETHYLENE TEREPHTHALATE COMPOSITION" (Internal Reference CL3879); commonly owned U.S. Application Serial No. 11/834,260, filed August 6, 2007, entitled "FLAME RETARDANT POLYTRIMETHYLENE TEREPHTHALATE COMPOSITION" (Internal Reference CL3880); and commonly owned U.S. Application Serial No. 11/834,289, filed August 6, 2007, entitled "FLAME RETARDANT POLYTRIMETHYLENE TEREPHTHALATE COMPOSITION" (Internal Reference CL3942).

### FIELD OF THE INVENTION

The present invention relates to flame retardant polytrimethylene terephthalate compositions comprising a fluorinated sulfonate salts as a flame retardant additive.

### BACKGROUND OF THE INVENTION

Polytrimethylene terephthalate ("PTT") is generally prepared by the polycondensation reaction of 1,3-propanediol with terephthalic acid or terephthalic acid esters. PTT resin, when compared to polyethylene terephthalate ("PET", made with ethylene glycol as opposed to 1,3-propane diol) or polybutylene terephthalate ("PBT", made with 1,4-butane diol as opposed to 1,3-propane diol), is superior in mechanical characteristics, weatherability, heat aging resistance and hydrolysis resistance.

PTT, PET and PBT find use in many application areas (such as carpets, home furnishings, automotive parts and electronic parts) that require a certain level of flame retardance. It is known that PTT in and of itself may, under certain circumstances, have insufficient flame retardance, which currently limits in many of these application areas.

There have been several attempts to improve the flame retardance properties of PTT compositions through the addition of various flame retardant additives. For example, PTT compositions containing halogen-type flame retardants have been widely studied. For example, GB1473369 discloses a resin composition containing polypropylene terephthalate or PBT, decabromodiphenyl ether, antimony trioxide and asbestos. US4131594 discloses a resin composition containing PTT and a graft copolymer halogen-type flame retardant, such as a polycarbonate oligomer of decabromobiphenyl ether or tetrabromobisphenol A, antimony oxide and glass fiber.

Several attempts have been made to prepare halogen-free flame retardant polyester formulations. Processes to make polyesters flame retardant by using halogen-free flame retardants based on P-containing and N-containing compounds are well known. Thus JP-A-06/157880 describes filled polyalkylene terephthalates containing melamine cyanurate and an aromatic phosphate. JP-B-3115195 describes polyesters with N-heterocyclic compounds and a polyfunctional group compound and optionally a P-based flame retardant. US4203888 teaches a polyester with organic diphosphates. However the compositions do not good exhibit good thermal stability especially on prolonged heat aging.

EP-A-0955338, EP-A-0955333 and JP-A-07/310284 propose PBT resin compositions containing melamine cyanurate, ammonium polyphosphate or melamine polyphosphate, phosphate ester and glass fiber. These compositions, however, have large warpage deformation and a poor appearance when molded, and thus cannot sufficiently satisfy the market's needs.

US2002/0120076A1 describes a polyester molding composition with an improved combination of flowability and mechanical properties. The molding composition comprises from 80 to 99.9 parts by weight of thermoplastic polyester and from 0.1 to 20 parts by weight of a polyamine-polyamide graft copolymer where the total of the parts by weight of the polyester and of the graft copolymer is 100. The polyamine-polyamide graft copolymer is prepared using the following monomers: (a) from 0.5 to 25% by weight, preferably from 1 to 20% by weight, and particularly preferably from 1.5 to 16% by weight, based on the graft copolymer, of a branched polyamine having at least 4 nitrogen atoms, preferably at least 8 nitrogen atoms, and particularly preferably at least 11 nitrogen atoms, and having a number-average molar mass $M_n$ of at least 146 g/mol, preferably of at least 500 g/mol, and particularly preferably of at least 800 g/mol, and (b) polyamide-forming monomers selected from lactams, omega-aminocarboxylic acids, and/or from equimolar combinations of diamine and dicarboxylic acid.

There still is a need to provide PTT compositions with improved flame retardancy properties.

## SUMMARY OF THE INVENTION

In accordance with the present invention, it has been found that fluorinated sulfonate salts can be blended into PTTs to effectively improve the flame retardancy properties of such PTTs.

The present invention thus provides a PTT-based composition comprising: (a) from about 75 to about 99.9 wt% of a resin component (based on the total composition weight) comprising at least about 70 wt% PTT (based on the weight of the resin component), and (b) from about 0.02 to about 25 wt% of an additive package (based on the total composition weight), wherein the additive package comprises from about 0.02 to about 5 wt% of a fluorinated sulfonate salt as a flame retardant additive (based on the total composition weight).

The PTT is of the type made by polycondensation of terephthalic acid or acid equivalent and 1,3-propanediol, with the 1,3-propane diol preferably being of the type that is obtained biochemically from a renewable source ("biologically-derived" 1,3-propanediol).

The invention also relates to a process for preparing a PTT composition with improved flame retardancy, comprising the steps of:

a) providing the fluorinated sulfonate salt and the PTT;

b) mixing the PTT and the fluorinated sulfonate salt to form a mixture; and

c) heating and blending the mixture with agitation to form the composition.

Another aspect of the invention relates to articles (such as fibers, films and molded parts) comprising the PTT composition, such articles having improved flame retardant properties.

Preferably the PTT composition comprises from about 0.1 to about 1 wt%, more preferably from about 0.5 to about 1 wt% percent, of the fluorinated sulfonate salt, based on the total composition weight.

## DETAILED DESCRIPTION OF THE PREFERRED EMBODIMENTS

All publications, patent applications, patents and other references mentioned herein, if not otherwise indicated, are explicitly incorporated by reference herein in their entirety for all purposes as if fully set forth.

Unless otherwise defined, all technical and scientific terms used herein have the same meaning as commonly understood by one of ordinary skill in the art to which this invention belongs. In case of conflict, the present specification, including definitions, will control.

Except where expressly noted, trademarks are shown in upper case.

Unless stated otherwise, all percentages, parts, ratios, etc., are by weight.

When an amount, concentration, or other value or parameter is given as either a range, preferred range or a list of upper preferable values and lower preferable values, this is to be understood as specifically disclosing all ranges formed from any pair of any upper range limit or preferred value and any lower range limit or preferred value, regardless of whether ranges are separately disclosed. Where a range of numerical values is recited herein, unless otherwise stated, the range is intended to include the endpoints thereof, and all integers and fractions within the range. It is not intended that the scope of the invention be limited to the specific values recited when defining a range.

When the term "about" is used in describing a value or an end-point of a range, the disclosure should be understood to include the specific value or end-point referred to.

As used herein, the terms "comprises," "comprising," "includes,$" "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive "or" and not to an exclusive "or". For example, a condition A "or" B is satisfied by any one of the following: A is true (or present) and B is false (or not present), A is false (or not present) and B is true (or present), and both A and B are true (or present).

Use of "a" or "an" are employed to describe elements and components of the invention. This is done merely for convenience and to give a general sense of the invention. This description should be read to include one or at least one and the singular also includes the plural unless it is obvious that it is meant otherwise.

The materials, methods, and examples herein are illustrative only and, except as specifically stated, are not intended to be limiting. Although methods and materials similar or equivalent to those described herein can be used in the practice or testing of the present invention, suitable methods and materials are described herein.

Resin Component

As indicated above, the resin component (and composition as a whole) comprises a predominant amount of a PTT.

PTTs suitable for use in the invention are well known in the art, and conveniently prepared by polycondensation of 1,3-propane diol with terephthalic acid or terephthalic acid equivalent.

By "terephthalic acid equivalent" is meant compounds that perform substantially like terephthalic acids in reaction with polymeric glycols and diols, as would be generally recognized by a person of ordinary skill in the relevant art. Terephthalic acid equivalents for the purpose of the present invention include, for example, esters (such as dimethyl terephthalate), and ester-forming derivatives such as acid halides (e.g., acid chlorides) and anhydrides.

Preferred are terephthalic acid and terephthalic acid esters, more preferably the dimethyl ester. Methods for preparation of PTTs are discussed, for example in US6277947, US6326456, US6657044, US6353062, US6538076, US2003/0220465A1 and commonly owned U.S. Patent Application No. 11/638919 (filed 14 December 2006, entitled "Continuous Process for Producing Poly(trimethylene Terephthalate)").

The 1,3-propanediol for use in making the PTT is preferably obtained biochemically from a renewable source ("biologically-derived" 1,3-propanediol).

A particularly preferred source of 1,3-propanediol is via a fermentation process using a renewable biological source. As an illustrative example of a starting material from a renewable source, biochemical routes to 1,3-propanediol (PDO) have been described that utilize feedstocks produced from biological and renewable resources such as corn feed stock. For example, bacterial strains able to convert glycerol into 1,3-propanediol are found in the species *Klebsiella, Citrobacter, Clostridium,* and *Lactobacillus.* The technique is disclosed in several publications, including previously incorporated US5633362, US5686276 and US5821092. US5821092 discloses, *inter alia,* a process for the biological production of 1,3-propanediol from glycerol using recombinant organisms. The process incorporates *E. coli* bacteria, transformed with a heterologous pdu diol dehydratase gene, having specificity for 1,2-propanediol. The transformed *E. coli* is grown in the presence of glycerol as a carbon source and 1,3-propanediol is isolated from the growth media. Since both bacteria and yeasts can convert glucose (e.g., corn sugar) or other carbohydrates to glycerol, the processes disclosed in these publications provide a rapid, inexpensive and environmentally responsible source of 1,3-propanediol monomer.

The biologically-derived 1,3-propanediol, such as produced by the processes described and referenced above, contains carbon from the atmospheric carbon dioxide incorporated by plants, which compose the feedstock for the production of the 1,3-propanediol. In this way, the biologically-derived 1,3-propanediol preferred for use in the context of the present invention contains only renewable carbon, and not fossil fuel-based or petroleum-based carbon. The polytrimethylene terephthalate based thereon utilizing the biologically-derived 1,3-propanediol, therefore, has less impact on the environment as the 1,3-propanediol used does not deplete diminishing fossil fuels and, upon degradation, releases carbon back to the atmosphere for use by plants once again. Thus, the compositions of the present invention can be characterized as more natural and having less environmental impact than similar compositions comprising petroleum based diols.

The biologically-derived 1,3-propanediol, and polytrimethylene terephthalate based thereon, may be distinguished from similar compounds produced from a petrochemical source or from fossil fuel carbon by dual carbon-isotopic finger printing. This method usefully distinguishes chemically-identical materials, and apportions carbon material by source (and possibly year) of growth of the biospheric (plant) component. The isotopes, $^{14}C$ and $^{13}C$, bring complementary information to this problem. The radiocarbon dating isotope ($^{14}C$), with its nuclear half life of 5730 years, clearly allows one to apportion specimen carbon between fossil ("dead") and biospheric ("alive") feedstocks (Currie, L. A. "Source Apportionment of Atmospheric Particles," Characterization of Environmental Particles. J. Buffle and H.P. van Leeuwen, Eds., 1 of Vol.I of the IUPAC Environmental Analytical Chemistry Series (Lewis Publishers, Inc) (1992) 3-74). The basic assumption in radiocarbon dating is that the constancy of $^{14}C$ concentration in the atmosphere leads to the constancy of $^{14}C$ in living organisms. When dealing with an isolated sample, the age of a sample can be deduced approximately by the relationship:

$$t = (-5730/0.693)\ln(A/A_0)$$

wherein t = age, 5730 years is the half-life of radiocarbon, and A and $A_0$ are the specific $^{14}C$ activity of the sample and of the modern standard, respectively (Hsieh, Y., Soil Sci. Soc. Am J., 56, 460, (1992)). However, because of atmospheric nuclear testing since 1950 and the burning of fossil fuel since 1850, $^{14}C$ has acquired a second, geochemical time characteristic. Its concentration in atmospheric $CO_2$, and hence in the living biosphere, approximately doubled at the

peak of nuclear testing, in the mid-1960s. It has since been gradually returning to the steady-state cosmogenic (atmospheric) baseline isotope rate ($^{14}C/^{12}C$) of *ca.* 1.2 x $10^{-12}$, with an approximate relaxation "half-life" of 7-10 years. (This latter half-life must not be taken literally; rather, one must use the detailed atmospheric nuclear input/decay function to trace the variation of atmospheric and biospheric $^{14}C$ since the onset of the nuclear age.) It is this latter biospheric $^{14}C$ time characteristic that holds out the promise of annual dating of recent biospheric carbon. $^{14}C$ can be measured by accelerator mass spectrometry (AMS), with results given in units of "fraction of modern carbon" ($f_M$). $f_M$ is defined by National Institute of Standards and Technology (NIST) Standard Reference Materials (SRMs) 4990B and 4990C, known as oxalic acids standards HOxI and HOxII, respectively. The fundamental definition relates to 0.95 times the $^{14}C/^{12}C$ isotope ratio HOxI (referenced to AD 1950). This is roughly equivalent to decay-corrected pre-Industrial Revolution wood. For the current living biosphere (plant material), $f_M \approx 1.1$.

The stable carbon isotope ratio ($^{13}C/^{12}C$) provides a complementary route to source discrimination and apportionment. The $^{13}C/^{12}C$ ratio in a given biosourced material is a consequence of the $^{13}C/^{12}C$ ratio in atmospheric carbon dioxide at the time the carbon dioxide is fixed and also reflects the precise metabolic pathway. Regional variations also occur. Petroleum, $C_3$ plants (the broadleaf), $C_4$ plants (the grasses), and marine carbonates all show significant differences in $^{13}C/^{12}C$ and the corresponding $\delta^{13}C$ values. Furthermore, lipid matter of $C_3$ and $C_4$ plants analyze differently than materials derived from the carbohydrate components of the same plants as a consequence of the metabolic pathway. Within the precision of measurement, $^{13}C$ shows large variations due to isotopic fractionation effects, the most significant of which for the instant invention is the photosynthetic mechanism. The major cause of differences in the carbon isotope ratio in plants is closely associated with differences in the pathway of photosynthetic carbon metabolism in the plants, particularly the reaction occurring during the primary carboxylation, i.e., the initial fixation of atmospheric $CO_2$. Two large classes of vegetation are those that incorporate the "$C_3$" (or Calvin-Benson) photosynthetic cycle and those that incorporate the "$C_4$" (or Hatch-Slack) photosynthetic cycle. $C_3$ plants, such as hardwoods and conifers, are dominant in the temperate climate zones. In $C_3$ plants, the primary $CO_2$ fixation or carboxylation reaction involves the enzyme ribulose-1,5-diphosphate carboxylase and the first stable product is a 3-carbon compound. $C_4$ plants, on the other hand, include such plants as tropical grasses, corn and sugar cane. In $C_4$ plants, an additional carboxylation reaction involving another enzyme, phosphenol-pyruvate carboxylase, is the primary carboxylation reaction. The first stable carbon compound is a 4-carbon acid, which is subsequently decarboxylated. The $CO_2$ thus released is refixed by the $C_3$ cycle.

Both $C_4$ and $C_3$ plants exhibit a range of $^{13}C/^{12}C$ isotopic ratios, but typical values are ca. -10 to -14 per mil ($C_4$) and -21 to -26 per mil ($C_3$) (Weber et al., J. Agric. Food Chem., 45, 2942 (1997)). Coal and petroleum fall generally in this latter range. The $^{13}C$ measurement scale was originally defined by a zero set by pee dee belemnite (PDB) limestone, where values are given in parts per thousand deviations from this material. The "$\delta^{13}C$" values are in parts per thousand (per mil), abbreviated ‰, and are calculated as follows:

$$\delta^{13}C \equiv \frac{(^{13}C/^{12}C)\text{sample} - (^{13}C/^{12}C)\text{standard}}{(^{13}C/^{12}C)\text{standard}} \times 1000‰$$

Since the PDB reference material (RM) has been exhausted, a series of alternative RMs have been developed in cooperation with the IAEA, USGS, NIST, and other selected international isotope laboratories. Notations for the per mil deviations from PDB is $\delta^{13}C$. Measurements are made on $CO_2$ by high precision stable ratio mass spectrometry (IRMS) on molecular ions of masses 44, 45 and 46.

Biologically-derived 1,3-propanediol, and compositions comprising biologically-derived 1,3-propanediol, therefore, may be completely distinguished from their petrochemical derived counterparts on the basis of $^{14}C$ ($f_M$) and dual carbon-isotopic fingerprinting, indicating new compositions of matter. The ability to distinguish these products is beneficial in tracking these materials in commerce. For example, products comprising both "new" and "old" carbon isotope profiles may be distinguished from products made only of "old" materials. Hence, the instant materials may be followed in commerce on the basis of their unique profile and for the purposes of defining competition, for determining shelf life, and especially for assessing environmental impact.

Preferably the 1,3-propanediol used as a reactant or as a component of the reactant in making PTT will have a purity of greater than about 99%, and more preferably greater than about 99.9%, by weight as determined by gas chromatographic analysis. Particularly preferred are the purified 1,3-propanediols as disclosed in US7038092, US7098368, US7084311 and US20050069997A1.

The purified 1,3-propanediol preferably has the following characteristics:

(1) an ultraviolet absorption at 220 nm of less than about 0.200, and at 250 nm of less than about 0.075, and at 275 nm of less than about 0.075; and/or

(2) a composition having a CIELAB "b*" color value of less than about 0.15 (ASTM D6290), and an absorbance at 270 nm of less than about 0.075; and/or

(3) a peroxide composition of less than about 10 ppm; and/or

(4) a concentration of total organic impurities (organic compounds other than 1,3-propanediol) of less than about 400 ppm, more preferably less than about 300 ppm, and still more preferably less than about 150 ppm, as measured by gas chromatography.

PTTs useful in this invention can be PTT homopolymers (derived substantially from 1,3-propane diol and terephthalic acid and/or equivalent) and copolymers, by themselves or in blends. PTTs used in the invention preferably contain about 70 mole % or more of repeat units derived from 1,3-propane diol and terephthalic acid (and/or an equivalent thereof, such as dimethyl terephthalate).

The PTT may contain up to 30 mole % of repeat units made from other diols or diacids. The other diacids include, for example, isophthalic acid, 1,4-cyclohexane dicarboxylic acid, 2,6-naphthalene dicarboxylic acid, 1,3-cyclohexane dicarboxylic acid, succinic acid, glutaric acid, adipic acid, sebacic acid, 1,12-dodecane dioic acid, and the derivatives thereof such as the dimethyl, diethyl, or dipropyl esters of these dicarboxylic acids. The other diols include ethylene glycol, 1,4-butane diol, 1,2-propanediol, diethylene glycol, triethylene glycol, 1,3-butane diol, 1,5-pentane diol, 1,6-hexane diol, 1,2-, 1,3- and 1,4-cyclohexane dimethanol, and the longer chain diols and polyols made by the reaction product of diols or polyols with alkylene oxides.

PTT polymers useful in the present invention may also include functional monomers, for example, up to about 5 mole % of sulfonate compounds useful for imparting cationic dyeability. Specific examples of preferred sulfonate compounds include 5-lithium sulfoisophthalate, 5-sodium sulfoisophthalate, 5-potassium sulfoisophthalate, 4-sodium sulfo-2,6-naphthalenedicarboxylate, tetramethylphosphonium 3,5-dicarboxybenzene sulfonate, tetrabutylphosphonium 3,5-dicarboxybenzene sulfonate, tributyl-methylphosphonium 3,5-dicarboxybenzene sulfonate, tetrabutylphosphonium 2,6-dicarboxynaphthalene-4-sulfonate, tetramethylphosphonium 2,6-dicarboxynapthalene-4-sulfonate, ammonium 3,5-dicarboxybenzene sulfonate, and ester derivatives thereof such as methyl, dimethyl, and the like.

More preferably, the PTTs contain at least about 80 mole %, or at least about 90 mole %, or at least about 95 mole %, or at least about 99 mole %, of repeat units derived from 1,3-propane diol and terephthalic acid (or equivalent). The most preferred polymer is polytrimethylene terephthalate homopolymer (polymer of substantially only 1,3-propane diol and terephthalic acid or equivalent).

The resin component may contain other polymers blended with the PTT such as PET, PBT, a nylon such nylon-6 and/or nylon-6,6, etc., and preferably contains at least about 70 wt%, or at least about 80 wt%, or at least about 90 wt%, or at least about 95 wt%, or at least about 99 wt%, PTT based on the weight of the resin component. In one preferred embodiment, PTT is used without such other polymers.

<u>Additive Package</u>

The PTT-based compositions of the present invention may contain additives such as antioxidants, residual catalyst, delusterants (such as $TiO_2$ zinc sulfide or zinc oxide), colorants (such as dyes), stabilizers, fillers (such as calcium carbonate), antimicrobial agents, antistatic agents, optical brightners, extenders, processing aids and other functional additives, hereinafter referred to as "chip additives". When used, $TiO_2$ or similar compounds (such as zinc sulfide and zinc oxide) are used as pigments or delusterants in amounts normally used in making PTT compositions, that is up to about 5 wt% or more (based on total composition weight) in making fibers and larger amounts in some other end uses. When used in polymer for fibers and films, $TiO_2$ is added in an amount of preferably at least about 0.01 wt%, more preferably at least about 0.02 wt%, and preferably up to about 5 wt%, more preferably up to about 3 wt%, and most preferably up to about 2 wt% (based on total composition weight).

By "pigment" reference is made to those substances commonly referred to as pigments in the art. Pigments are substances, usually in the form of a dry powder, that impart color to the polymer or article (e.g., chip or fiber). Pigments can be inorganic or organic, and can be natural or synthetic. Generally, pigments are inert (e.g., electronically neutral and do not react with the polymer) and are insoluble or relatively insoluble in the medium to which they are added, in this case the polytrimethylene terephthalate composition. In some instances they can be soluble.

The flame retarding additive used in the compositions of the present invention is a fluorinated sulfonate salt. Although the compounds are not strictly "ionic liquids", they are at times referred to as such.

As used herein, the term "ionic liquid" refers to a liquid consisting entirely of ions. Ionic liquids are also known as liquid organic salts, fused salt, molten salts, ionic melts, nonaqueous ionic liquids, room-temperature ionic liquids, organic ionic liquids and ionic fluids. These are more fully described by A. Stark and K. R. Seddon in Vol. 26 of Kirk-Othmer Encyclopedia of Chemical Technology, 5th edition, John Wiley & Sons, Inc., 2007, pages 836-920.

As used herein, "fluorinated" refers to a compound that contains at least one fluorine in place of a hydrogen. "Fluorinated" does not by definition include "perfluorinated", where all possible hydrogens have been replaced by fluorine.

The flame retardant additive is one or more fluorinated sulfonate salts of the formula (I)

$$M^+Q^- \qquad (I)$$

wherein:

$M^+$ is a cation selected from the group consisting of lithium, sodium, potassium, cesium, pyridinium, pyridazinium, pyrimidinium, pyrazinium, imidazolium, pyrazolium, thiazolium, oxazolium, triazolium, phosphium and ammonium; and

$Q^-$ is an anion selected from the group consisting of formula (II) and formula (III),

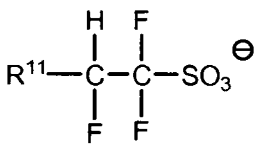

(II)

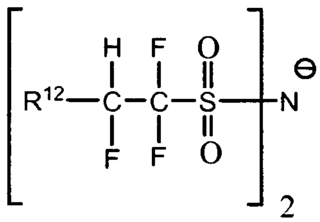

(III)

wherein each of $R^{11}$ and $R^{12}$ are independently selected from the group consisting of:

(1) halogen;

(2) $-CH_3$, $-C_2H_5$ or $C_3$ to $C_{15}$, preferably $C_3$ to $C_6$, straight-chain or branched alkane or alkene, optionally substituted with at least one member selected from the group consisting of Cl, Br, I, OH, $NH_2$ and SH;

(3) $-OCH_3$, $-OC_2H_5$ or $C_3$ to $C_{15}$, preferably $C_3$ to $C_6$, straight-chain or branched alkoxy, optionally substituted with at least one member selected from the group consisting of Cl, Br, I, OH, $NH_2$ and SH;

(4) $C_1$ to $C_{15}$, preferably $C_1$ to $C_6$, straight-chain or branched fluoroalkyl, optionally substituted with at least one member selected from the group consisting of Cl, Br, I, OH, $NH_2$ and SH;

(5) $C_1$ to $C_{15}$, preferably $C_1$ to $C_6$, straight-chain or branched fluoroalkoxy, optionally substituted with at least one member selected from the group consisting of Cl, Br, I, OH, $NH_2$ and SH;

(6) $C_1$ to $C_{15}$, preferably $C_1$ to $C_6$, straight-chain or branched perfluoroalkyl; and

(7) $C_1$ to $C_{15}$, preferably $C_1$ to $C_6$, straight-chain or branched perfluoroalkoxy.

In the above formula (I), the pyridinium cation preferably has the formula (IV)

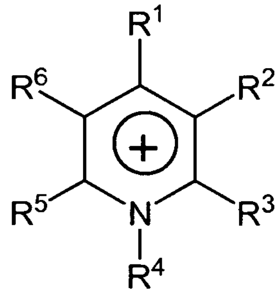

(IV)

the pyridazinium cation preferably has the formula (V)

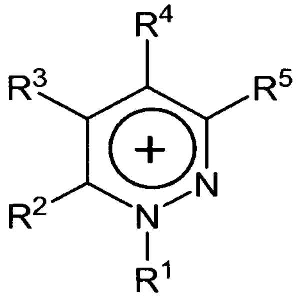

(V)

the pyrimidinium cation preferably has the formula (VI)

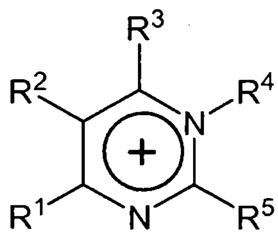

(VI)

the pyrazinium cation preferably has the formula (VII)

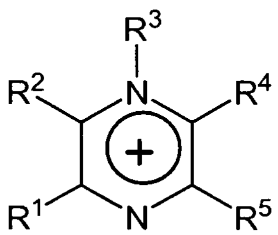

(VII)

the imidazolium cation preferably has the formula (VIII)

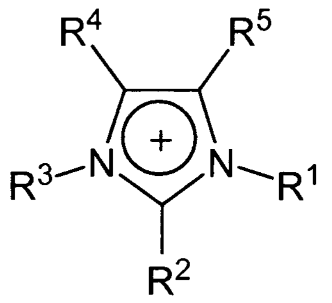

(VIII)

the pyrazolium cation preferably has the formula (IX)

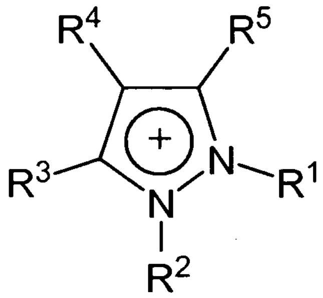

(IX)

the thiazolium cation preferably has the formula (X)

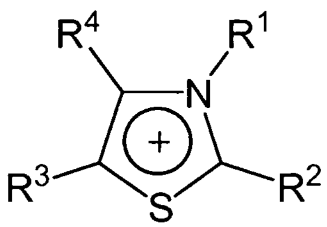

(X)

the oxazolium cation preferably has the formula (XI)

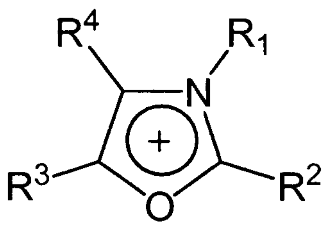

(XI)

the triazolium cation preferably has the formula (XII)

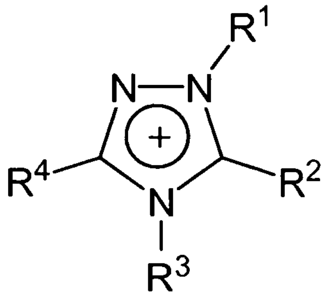

(XII)

the phosphonium cation preferably has the formula (XIII)

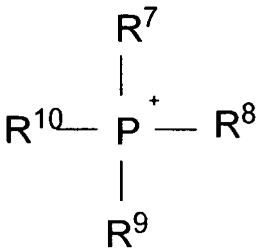

(XIII)

and the ammonium cation preferably has the formula (XIV)

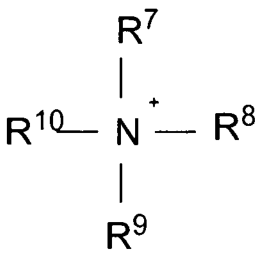

(XIV)

wherein:

$R^1$, $R^2$, $R^3$, $R^4$, $R^5$ and $R^6$ are each independently selected from the group consisting of:

(a) H
(b) halogen
(c) $-CH_3$, $-C_2H_5$, or a $C_3$ to $C_{25}$ (preferably $C_3$ to $C_{20}$) straight-chain, branched or cyclic alkane or alkene, optionally substituted with at least one member se- lected from the group consisting of Cl, Br, F, I, OH, $NH_2$ and SH;
(d) $C_3$ to $C_{25}$, preferably $C_3$ to $C_{20}$, cyclic alkane or alkene comprising one to three heteroatoms selected from the group consisting of O, N, Si, and S, and optionally substituted with at least one member selected from the group con- sisting of Cl, Br, F, I, OH, $NH_2$ and SH;
(e) $C_6$ to $C_{25}$ unsubstituted aryl or $C_6$ to $C_{25}$ unsubstituted heteroaryl having one to three heteroatoms independently selected from the group consisting of O, N, Si, and S; and
(f) $C_6$ to $C_{25}$ substituted aryl or $C_6$ to $C_{25}$ substituted heteroaryl having one to three heteroatoms independently selected from the group consisting of O, N, Si, and S; and wherein said substituted aryl or substituted heteroaryl has one to three substituents independently selected from the group consisting of:

(1) $-CH_3$, $-C_2H_5$, or $C_3$ to $C_{25}$, preferably $C_3$ to $C_{20}$, straight-chain, branched or cyclic alkane or alkene, optionally substituted with at least one member selected from the group consisting of Cl, Br, F, I, OH, $NH_2$ and SH,
(2) OH,
(3) $NH_2$, and
(4) SH;

$R^7$ $R^8$, $R^9$, and $R^{10}$ are each independently selected from the group consisting of:

(g) $-CH_3$, $-C_2H_5$, or $C_3$ to $C_{25}$ (preferably $C_3$ to $C_{20}$) straight-chain, branched or cyclic alkane or alkene, optionally substituted with at least one member se- lected from the group consisting of Cl, Br, F, I, OH, $NH_2$ and SH;
(h) $C_3$ to $C_{25}$ (preferably $C_3$ to $C_{20}$) cyclic alkane or alkene comprising one to three heteroatoms selected from the group consisting of O, N, Si, and S, and optionally substituted with at least one member selected from the group con- sisting of Cl, Br, F, I, OH, $NH_2$ and SH;
(j) $C_6$ to $C_{25}$ unsubstituted aryl or $C_6$ to $C_{25}$ unsubstituted heteroaryl having one to three heteroatoms independently selected from the group consisting of O, N, Si, and S; and
(k) $C_6$ to $C_{25}$ substituted aryl or $C_6$ to $C_{25}$ substituted heteroaryl having one to three heteroatoms independently selected from the group consisting of O, N, Si, and S; and wherein said substituted aryl or substituted heteroaryl has one to three substituents independently selected from the group consisting of

(1) $-CH_3$, $-C_2H_5$, or $C_3$ to $C_{25}$, preferably $C_3$ to $C_{20}$, straight-chain, branched or cyclic alkane or alkene, optionally substituted with at least one member selected from the group consisting of Cl, Br, F, I, OH, $NH_2$ and SH,
(2) OH,
(3) $NH_2$, and
(4) SH;

and wherein optionally at least two of $R^1$, $R^2$, $R^3$, $R^4$, $R^5$, $R^6$, $R^7$, $R^8$, $R^9$, and $R^{10}$ can together form a cyclic or bicyclic alkanyl or alkenyl group.

Sources of cations ($M^+$) useful for the present invention are available commercially, or may be synthesized by methods known to those skilled in the art.

Preferred anions $Q^-$ are selected from the group consisting of fluoroalkyl sulfonyl and bis(fluoroalkylsulfonyl) imide anions.

Specific examples of fluorinated sulfonate salts based on anions of the fomula (II) include potassium 1,1,2,2-tetrafluoroethanesulfonate, potassium 1,1,2,3,3,3-hexafluoropropanesulfonate, potassium 1,1,2-trifluoro-2-(trifluoromethoxy)ethanesulfonate and potassium 1,1,2-trifluoro-2-(pentafluoroethoxy)ethanesulfonate).

Fluoroalkyl sulfonate salts based on anions of the formula (II) may be synthesized from perfluorinated terminal olefins or perfluorinated vinyl ethers generally according to the methods described in US2006/0276670A1 (see paragraph 14 through paragraph 65) and US2006/0276671A1 (see paragraph 12 through paragraph 88). In one preferred embodiment of these methods, potassium sulfite and bisulfite are used as the buffer, and in another preferred embodiment the reaction is carried in the absence of a radical initiator. Preferred isolation methods include freeze drying or spray drying to isolate the crude products (such as potassium 1,1,2,2-tetrafluoroethanesulfonate, potassium 1,1,2,3,3,3-hexafluoropropanesulfonate, potassium 1,1,2-trifluoro-2-(trifluoromethoxy)ethanesulfonate and potassium 1,1,2-trifluoro-2-(pentafluoroethoxy)ethanesulfonate) from the aqueous reaction mixture, using acetone to extract the crude salts, and crystallizing such salts from the reaction mixture by cooling.

Specific examples of fluorinated sulfonate salts based on anions of the formula (III) include potassium bis (1,1,2,2-tetrafluoroethanesulfonyl)imide, potassium (1,1,2,3,3,3-hexafluoropropanesulfonyl)imide potassium (1,1,2-trifluoro-2-(trifluoromethoxy)ethanesulfonyl)imide.

Bis(fluoroalkylsulfonyl)imide salts based on anions of the formula (III) can be synthesized as described for the synthesis of bis(perfluoroalkylsulfonyl)imide salt compounds such as $(R_fSO_2)_2N(-)M(+)$. See, for example, US5847616; US6252111; US6399821; DesMarteau, D. and Hu, L.Q., Inorg. Chem. (1993), 32, 5007-5010; and Caporiccio, G. et al, J. Fluor. Chem. (2004), 125, 243-252.

For example, 1,1,2,2-tetrafluoroethanesulfonic acid can first be converted to the corresponding sulfonyl chloride by reaction with a suitable chlorinating reagent such as $PCl_5$ or catechol-$PCl_3$ as described in US2403207 and EP-A-047946. The chlorine can be replaced by fluorine using potassium fluoride in an organic solvent such as acetonitrile to produce the sulfonyl fluoride.

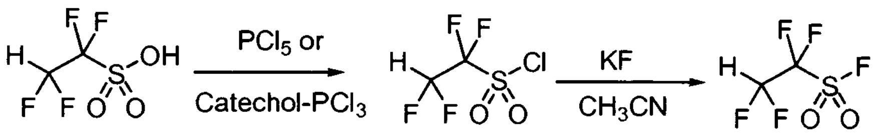


The sulfonyl fluoride can then be recovered, and two molecules of the sulfonyl fluoride can be coupled (as described in Lyapkalo, I.M., Tetrahedron (2006) 62, 3137-3145) to make the bis(fluoroalkylsulfonyl)imide. According to this procedure, ammonium chloride and triethylamine ($Et_3N$) are used in an organic solvent such as acetonitrile to convert the sulfonyl fluoride to the triethylammonium ($NHEt_3$) salt of the bis(fluoroalkylsulfonyl)imide. The potassium salt is then obtained by further treatment with potassium hydroxide in aqueous methanol.

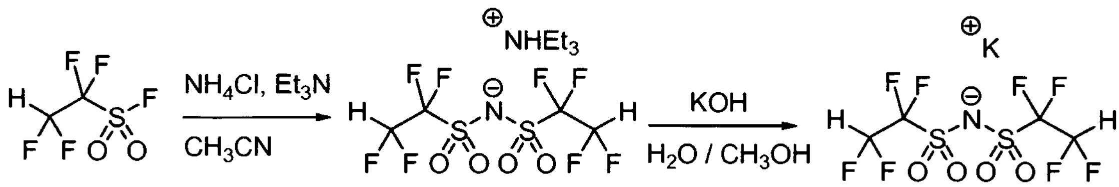


Mixtures of one or more fluorinated sulfonate salts, as well as mixtures of one or more fluorinated sulfonate salts with one or more other flame retardant additives, are suitable for use in the present invention.

The PTT-based compositions of the invention may be prepared by conventional blending techniques well known to those skilled in the art, e.g. compounding in a polymer extruder, melt blending, etc.

Preferably the resin component and flame retardant additive(s) are melt blended. More specifically they are mixed and heated at a temperature sufficient to form a melt blend, and spun into fibers or formed into shaped articles, preferably in a continuous manner. The ingredients can be formed into a blended composition in many different ways. For instance, they can be (a) heated and mixed simultaneously, (b) pre-mixed in a separate apparatus before heating, or (c) heated and then mixed. The mixing, heating and forming can be carried out by conventional equipment designed for that purpose such as extruders, Banbury mixers or the like. The temperature should be above the melting points of each component but below the lowest decomposition temperature, and accordingly must be adjusted for any particular composition of PTT and flame retardant additive. The temperature is typically in the range of about 180°C to about 270°C.

The amount of fluorinated sulfonate salt additive utilized is preferably from about 0.02 to about 5 wt%, based on total composition weight. More preferably, the PTT composition comprises from about 0.1 to about 1 wt%, and still more preferably from about 0.5 to about 1 wt% percent, of the fluorinated sulfonate salt, based on the total composition weight.

## Uses

The PTT-based compositions of this invention is useful in fibers, fabrics, films and other useful articles, and methods of making such compositions and articles, as disclosed in a number of the previously incorporated references. They may be used, for example, for producing continuous and cut (e.g., staple) fibers, yarns, and knitted, woven and nonwoven textiles. The fibers may be monocomponent fibers or multicomponent (e.g., bicomponent) fibers, and may have many different shapes and forms. They are useful for textiles and flooring.

A particularly preferred end use of the PTT-based compositions of the invention is in the making of fibers for carpets, such as disclosed in US7013628.

## EXAMPLES

In the following examples, all parts, percentages, etc., are by weight unless otherwise indicated.

### Ingredients

The PTT used in the examples was SORONA® "semi-bright" polymer available from E.I. du Pont de Nemours and Company (Wilmington, Delaware).

The fluorinated sulfonate salt utilized in the example was Potassium 1,1,2,2-tetrafluoroethanesulfonate (TFES-K) synthesized by the procedure described in US2006/0276671A1.

The approach to demonstrating flammability improvement was to (1) compound the flame retardant additive into the PTT, (2) cast a film of the modified PTT, and (3) test the flammability of the film to determine the flammability improvement with the flame retardant additive.

Flame Retardant Additive Compounding

SORONA® polymer was dried in a vacuum oven at 120°C for 16 hours, and flame retardant additive was also dried in a vacuum oven at 80°C for 16 hours.

Dry polymer was fed at a rate of 18 pounds/hour to the throat of a W & P 30A twin screw extruder (MJM #4, 30 mm screw) with a temperature profile of 190°C at the first zone to 250°C at the screw tip and at the one hole strand die (4.76 mm diameter). Dry flame retardant additive was fed to the throat of the extruder at a rate needed to achieve the specified concentration in the polymer, for example, at a rate of 2 pounds/hour to get a 10% loading into polymer. The throat of the extruder was purged with dry nitrogen gas during operation to minimize polymer degradation. The extrusion system was purged with dry polymer for >3 minutes prior to introduction of each flame retardant additive. Unmodified polymer or compounded polymer strand from the 4.76 mm die was cut into pellets for further processing into film.

Film Preparation

All samples were dried at 120°C for 16 hours before use in preparing films.

Unmodified SORONA® polymer and compounded SORONA® polymer samples were fed to the throat of a W & P 28D twin screw extruder (MGW #3, 28 mm screw). The extruder throat was purged with dry nitrogen during operation to minimize degradation. Zone temperatures ranged from 200°C at the first zone to 240°C at the screw tip with a screw speed of 100 rpm. Molten polymer was delivered to the film die, 254 mm wide x 4 mm height, to produce a 4 mm thick film, 254 mm wide and up to about 18 meters long. The extruder system was purged with unmodified SORONA® polymer for at least 5 minutes prior to film preparation with each compounded test item.

Test Sample Preparation

For each test item ten test specimens were press cut from the 4 mm thick film using a 51 mm x 152 mm die. Five specimens were cut in the film longitudinal (extrusion) direction and five specimens were cut in the transverse (perpendicular to extrusion) direction. Test film specimens were oven dried at 105°C for greater than 30 minutes followed by cooling in a desiccator for greater than 15 minutes before testing.

Film Flammability Test

A film specimen, 51 mm x 152 mm x 4 mm, obtained as described above was held at an angle of 45°. A butane flame, 19 mm in length, was applied to the lower, 51-mm width, edge of the film until ignition occurred. After the flame self extinguished, the percent of the film specimen which burned or disappeared was determined and was recorded as percent consumed. The lower the percent consumed result the better the flame retardancy of the additive.

Comparative Example A

Sorona® PTT film with no flame-retardant additive was prepared and tested as described above. With no flame retardant the polymer film was completely consumed by flame without self extinguishing; i.e., 100% consumed.

Examples 1-2

Testing results for Comparative Example A and Examples 1-2 are presented in Table 1. As shown, the flame retardant additive improved the flame retardance of polytrimethylene terephthalate, even at low, 0.5% additive levels.

Table 1

| Example No. | Flame Retardant | % Consumed in Flammability Test | | | | |
|---|---|---|---|---|---|---|
| | | 1.0 wt. % Retardant | 0.5 wt. % Retardant | 0.1 wt. % Retardant | 0.05 wt. % Retardant | 0 wt. % Retardant |
| Comp. A | None | | | | | 100 |
| 1 | TFES-K | 25.0 | 23.5 | | | |
| 2 | TFES-K | | 37.0 | 94.5 | 100 | |

**Claims**

**1.** A polytrimethylene terephthalate-based composition comprising: (a) from about 75 to about 99.9 wt% of a resin component (based on the total composition weight) comprising at least about 70 wt% of a polytrimethylene terephthalate (based on the weight of the resin component), and (b) from about 0.02 to about 25 wt% of an additive package (based on the total composition weight), wherein the additive package comprises from about 0.02 to about 5 wt% of a fluorinated sulfonate salt as a flame retardant additive (based on the total composition weight) wherein the fluorinated sulfonate salts are of the formula (I)

$$M^+Q^- \quad (I)$$

wherein:

$M^+$ is a cation selected from the group consisting of lithium, sodium, potassium, cesium, pyridinium, pyridazinium, pyrimidinium, pyrazinium, imidazolium, pyrazolium, thiazolium, oxazolium, triazolium, phosphium and ammonium; and

$Q^-$ is an anion selected from the group consisting of formula (II) and formula (III),

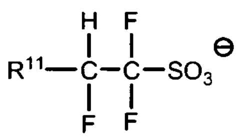

(II)

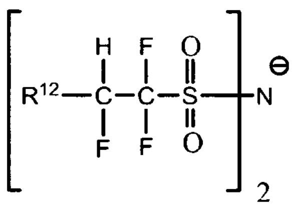

(III)

wherein each of $R^{11}$ and $R^{12}$ are independently selected from the group consisting of:

(1) halogen;
(2) $-CH_3$, $-C_2H_5$ or $C_3$ to $C_{15}$ straight-chain or branched alkane or alkene, optionally substituted with at least one member selected from the group consisting of Cl, Br, I, OH, $NH_2$ and SH;
(3) $-OCH_3$, $-OC_2H_5$ or $C_3$ to $C_{15}$ straight-chain or branched alkoxy, optionally substituted with at least one member selected from the group consisting of Cl, Br, I, OH, $NH_2$ and SH;
(4) $C_1$ to $C_{15}$ straight-chain or branched fluoroalkyl, optionally substituted with at least one member selected from the group consisting of Cl, Br, I, OH, $NH_2$ and SH;

(5) $C_1$ to $C_{15}$ straight-chain or branched fluoroalkoxy, optionally substituted with at least one member selected from the group consisting of Cl, Br, I, OH, $NH_2$ and SH;
(6) $C_1$ to $C_{15}$ straight-chain or branched perfluoroalkyl; and
(7) $C_1$ to $C_{15}$ straight-chain or branched perfluoroalkoxy.

**2.** The polytrimethylene terephthalate-based composition of claim 1 wherein M+ is selected from the group consisting of:

(i) a pyridinium cation of the formula (IV)

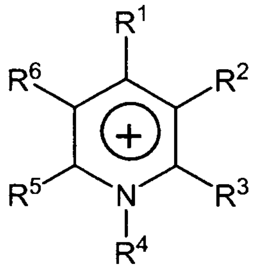

(IV)

(ii) a pyridazinium cation of the formula (V)

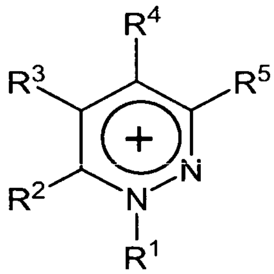

(V)

(iii) a pyrimidinium cation of the formula (VI)

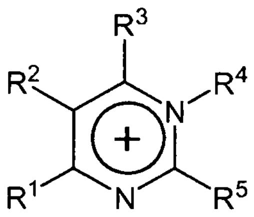

(VI)

(iv) a pyrazinium cation of the formula (VII)

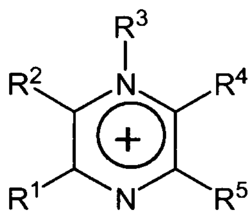

(VII)

(v) an imidazolium cation of the formula (VIII)

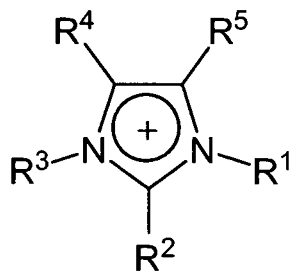

(VIII)

(vi) a pyrazolium cation of the formula (IX)

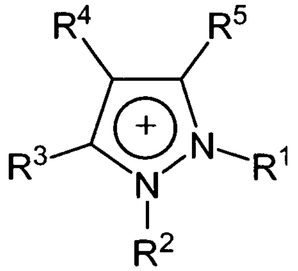

(IX)

(vii) a thiazolium cation of the formula (X)

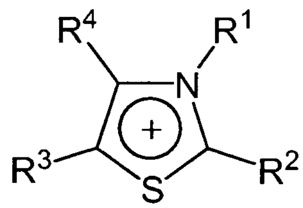

(X)

(viii) an oxazolium cation of the formula (XI)

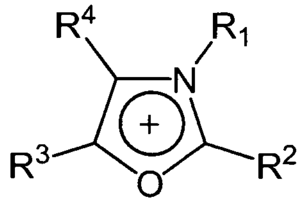

(XI)

(ix) a triazolium cation of the formula (XII)

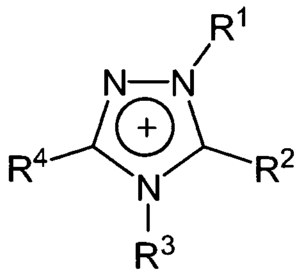

(XII)

(x) a phosphonium cation of the formula (XIII)

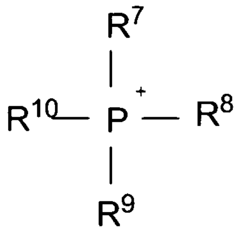

(XIII)

and (xi) an ammonium cation of the formula (XIV)

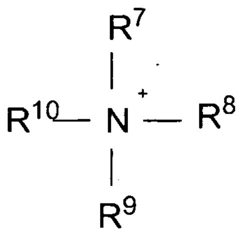

(XIV)

wherein:

$R^1$, $R^2$, $R^3$, $R^4$, $R^5$ and $R^6$ are each independently selected from the group consisting of:

(a) H
(b) halogen
(c) $-CH_3$, $-C_2H_5$, or a $C_3$ to $C_{25}$ straight-chain, branched or cyclic alkane or alkene, optionally substituted with at least one member selected from the group consisting of Cl, Br, F, I, OH, $NH_2$ and SH;
(d) $C_3$ to $C_{25}$ cyclic alkane or alkene comprising one to three heteroatoms selected from the group consisting of O, N, Si, and S, and optionally substituted with at least one member selected from the group consisting of Cl, Br, F, I, OH, $NH_2$ and SH;
(e) $C_6$ to $C_{25}$ unsubstituted aryl or $C_6$ to $C_{25}$ unsubstituted heteroaryl having one to three heteroatoms independently selected from the group consisting of O, N, Si, and S; and
(f) $C_6$ to $C_{25}$ substituted aryl or $C_6$ to $C_{25}$ substituted heteroaryl having one to three heteroatoms independently selected from the group consisting of O, N, Si, and S; and wherein said substituted aryl or substituted heteroaryl has one to three substituents independently selected from the group consisting of:

(1) $-CH_3$, $-C_2H_5$, or $C_3$ to $C_{25}$ straight-chain, branched or cyclic alkane or alkene, optionally substituted with at least one member selected from the group consisting of Cl, Br, F, I, OH, $NH_2$ and SH,
(2) OH,
(3) $NH_2$, and
(4) SH;

$R^7$ $R^8$, $R^9$, and $R^{10}$ are each independently selected from the group consisting of:

(g) $-CH_3$, $-C_2H_5$, or $C_3$ to $C_{25}$ straight-chain, branched or cyclic alkane or alkene, optionally substituted with at least one member selected from the group consisting of Cl, Br, F, I, OH, $NH_2$ and SH;
(h) $C_3$ to $C_{25}$ cyclic alkane or alkene comprising one to three heteroatoms selected from the group consisting of O, N, Si, and S, and optionally substituted with at least one member selected from the group consisting of Cl, Br, F, I, OH, $NH_2$ and SH;
(j) $C_6$ to $C_{25}$ unsubstituted aryl or $C_6$ to $C_{25}$ unsubstituted heteroaryl having one to three heteroatoms independently selected from the group consisting of O, N, Si, and S; and
(k) $C_6$ to $C_{25}$ substituted aryl or $C_6$ to $C_{25}$ substituted heteroaryl having one to three heteroatoms independently selected from the group consisting of O, N, Si, and S; and wherein said substituted aryl or substituted heteroaryl has one to three substituents independently selected from the group consisting of

(1) $-CH_3$, $-C_2H_5$, or $C_3$ to $C_{25}$ straight-chain, branched or cyclic alkane or alkene, optionally substituted with at least one member selected from the group consisting of Cl, Br, F, I, OH, $NH_2$ and SH,
(2) OH,
(3) $NH_2$, and
(4) SH;

and wherein optionally at least two of $R^1$, $R^2$, $R^3$, $R^4$, $R^5$, $R^6$, $R^7$, $R^8$, $R^9$, and $R^{10}$ can together form a cyclic or bicyclic alkanyl or alkenyl group.

**3.** The polytrimethylene terephthalate-based composition of claim **1**, wherein Q-is selected from the group consisting of fluoroalkyl sulfonyl and bis(fluoroalkylsulfonyl)imide anions.

**4.** The polytrimethylene terephthalate-based composition of claim 2, wherein Q-is selected from the group consisting of fluoroalkyl sulfonyl and bis(fluoroalkylsulfonyl)imide anions.

**5.** The polytrimethylene terephthalate-based composition of claim **1**, wherein the additive package comprises from about 0.1 to about 1 wt% of a fluorinated sulfonate salt (based on total composition weight).

**6.** The polytrimethylene terephthalate-based composition of claim 1, wherein the additive package comprises from about 0.5 to about 1 wt% of a fluorinated sulfonate salt (based on total composition weight).

**7.** The polytrimethylene terephthalate-based composition of claim 1, wherein the polytrimethylene terephthalate is a polytrimethylene terephthalate homopolymer.

**8.** The polytrimethylene terephthalate-based composition of claim 1, wherein the resin component comprises another polymer.

**9.** The polytrimethylene terephthalate-based composition of claim 8, wherein the resin component comprises a polyethylene terephthalate.

**10.** The polytrimethylene terephthalate-based composition of claim 8, wherein the resin component comprises a polybutylene terephthalate.

**11.** The polytrimethylene terephthalate-based composition of claim 8, wherein the resin component comprises a nylon.

**12.** The polytrimethylene terephthalate-based composition of claim 1, wherein the additive package comprises a $TiO_2$.

**13.** An article made from the polytrimethylene terephthalate-based composition of claim 1.

**14.** The article of claim 13, that is in the form of a fiber.

**Patentansprüche**

**1.** Zusammensetzung auf der Basis von Polytrimethylenterephthalat umfassend: (a) etwa 75 bis etwa 99,9 Gew.-%

einer Harzkomponente (auf das Gesamtgewicht der Zusammensetzung bezogen) umfassend mindestens etwa 70 Gew.-% Polytrimethylenterephthalat (auf das Gesamtgewicht der Zusammensetzung bezogen) und (b) etwa 0,02 bis etwa 25 Gew.-% eines Zusatzmittelpakets (auf das Gesamtgewicht der Zusammensetzung bezogen), wobei das Zusatzmittelpaket etwa 0,02 bis etwa 5 Gew.-% eines fluorierten Sulfonatsalzes als flammhemmendes Zusatzmittel (auf das Gesamtgewicht der Zusammensetzung bezogen) umfasst, wobei die fluorierten Sulfonatsalze die Formel (I)

$$M^+Q^- \qquad (I)$$

aufweisen, wobei:

$M^+$ ein Kation ist ausgewählt aus der Gruppe bestehend aus Lithium, Natrium, Kalium, Cäsium, Pyridinium, Pyridazinium, Pyrimidinium, Pyrazinium, Imidazolium, Pyrazolium, Thiazolium, Oxazolium, Triazolium, Phosphium und Ammonium; und
$Q^-$ ein Anion ist ausgewählt aus der Gruppe bestehend aus Formel (II) und Formel (III)

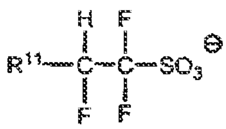 (II)

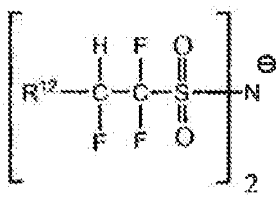 (III)

wobei jedes von $R^{11}$ und $R^{12}$ unabhängig aus der Gruppe ausgewählt ist bestehend aus:

(1) Halogen,
(2) -$CH_3$, -$C_2H_5$ oder geradkettigem oder verzweigtem $C_3$- bis C-$_{15}$-Alkan oder -Alken, wahlweise mit mindestens einem Glied substituiert ausgewählt aus der Gruppe bestehend aus Cl, Br, I, OH, $NH_2$ und SH;
(3) -$OCH_3$, "$OC_2H_5$ oder geradkettigem oder verzweigtem $C_3$- bis C-$_{15}$-Alkoxy, wahlweise mit mindestens einem Glied substituiert ausgewählt aus der Gruppe bestehend aus Cl, Br, I, OH, $NH_2$ und SH;
(4) geradkettigem oder verzweigtem $C_1$- bis C-$_{15}$-Fluoralkyl, wahlweise mit mindestens einem Glied substituiert ausgewählt aus der Gruppe bestehend aus Cl, Br, I, OH, $NH_2$ und SH;
(5) geradkettigem oder verzweigtem $C_1$- bis C-$_{15}$-Fluoralkoxy, wahlweise mit mindestens einem Glied substituiert ausgewählt aus der Gruppe bestehend aus Cl, Br, I, OH, $NH_2$ und SH;
(6) geradkettigem oder verzweigtem $C_1$- bis C-$_{15}$-Perfluoralkyl; und
(7) geradkettigem oder verzweigtem $C_1$- bis C-$_{15}$-Perfluoralkoxy.

**2.** Zusammensetzung auf der Basis von Polytrimethylenterephthalat nach Anspruch 1, wobei

$M^+$ aus der Gruppe ausgewählt ist bestehend aus:

(i) einem Pyridiniumkation der Formel (IV)

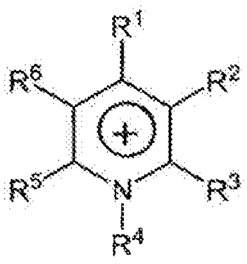

(IV)

(ii) einem Pyridaziniumkation der Formel (V)

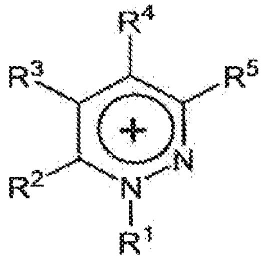

(V)

(iii) einem Pyrimidiniumkation der Formel (VI)

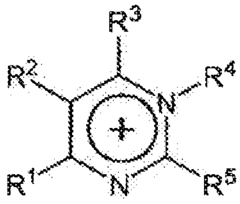

(VI)

(iv) einem Pyraziniumkation der Formel (VII)

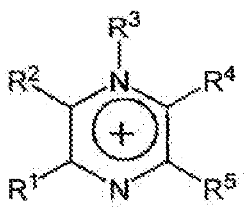

(VII)

(v) einem Imidazoliumikation der Formel (VIII)

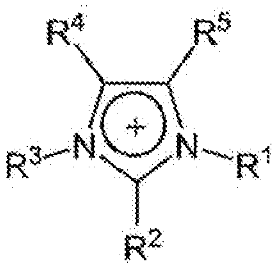

(VIII)

(vi) einem Pyrazoliumkation der Formel (IX)

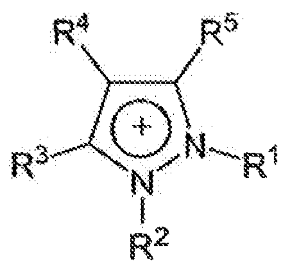

(IX)

(vii) einem Thiazoliumkation der Formel (X)

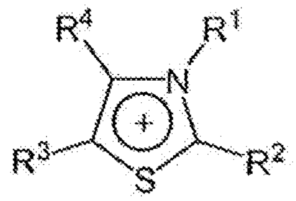

(X)

(viii) einem Oxazoliumkation der Formel (XI)

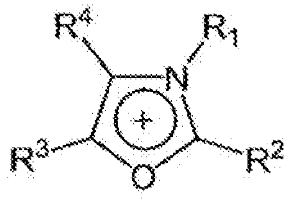

(XI)

(ix) einem Triazoliumkation der Formel (XII)

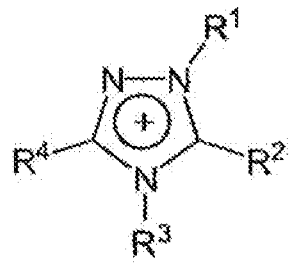

(XII)

(x) einem Phosphiumkation der Formel (XIII)

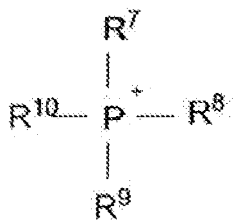

(XIII)

und (xi) einem Ammoniumkation der Formel (XIV)

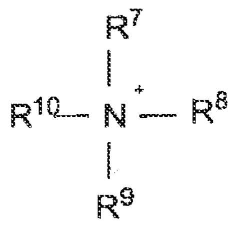

(XIV)

wobei:
$R^1$, $R^2$, $R^3$, $R^4$, $R^5$ und $R^6$ jeweils unabhängig aus der Gruppe ausgewählt sind bestehend aus:

(a) H
(b) Halogen
(c) "$CH_3$, $-C_2H_5$ oder einem geradkettigen, verzweigten oder cyclischen $C_3$-bis $C\text{-}_{25}$-Alkan oder -Alken ist, wahlweise mit mindestens einem Glied substituiert ausgewählt aus der Gruppe bestehend aus Cl, Br, F, I, OH, $NH_2$ und SH;
(d) cyclischem $C_3$- bis $C\text{-}_{25}$-Alkan oder -Alken umfassend ein bis drei Heteroatome ausgewählt aus der Gruppe bestehend aus O, N, Si und S und wahlweise mit mindestens einem Glied substituiert ausgewählt aus der Gruppe bestehend aus Cl, Br, F, I, OH, $NH_2$ und SH;
(e) unsubstituiertem $C_6$- bis $C\text{-}_{25}$-Aryl oder unsubstituiertem bis $C\text{-}_{25}$-Heteroaryl, das ein bis drei Heteroatome aufweist, die unabhängig aus der Gruppe ausgewählt sind bestehend aus O, N, Si und S; und
(f) substituiertem $C_6$- bis $C\text{-}_{25}$-Aryl oder substituiertem $C_6$- bis $C\text{-}_{25}$-Heteroaryl, das ein bis drei Heteroatome aufweist, die unabhängig aus der Gruppe ausgewählt sind bestehend aus O, N, Si und S; und wobei das substituierte Aryl oder substituierte Heteroaryl einen bis drei Substituenten aufweist, die unabhängig aus der Gruppe ausgewählt sind bestehend aus:

(1) $-CH_3$, $-C_2H_5$ oder geradkettigem, verzweigtem oder cyclischem $C_3$-bis $C\text{-}_{25}$-Alkan oder -Alken ist, wahlweise mit mindestens einem Glied substituiert ausgewählt aus der Gruppe bestehend aus Cl, Br, F, I, OH, $NH_2$ und SH;
(2) OH,
(3) $NH_2$ und
(4) SH;

$R^7$ $R^8$, $R^9$ und $R^{10}$ jeweils unabhängig aus der Gruppe ausgewählt sind bestehend aus:

(g) $-CH_3$, $-C_2H_5$ oder geradkettigem, verzweigtem oder cyclischem $C_3$- bis $C\text{-}_{25}$-Alkan oder -Alken, wahlweise mit mindestens einem Glied substituiert ausgewählt aus der Gruppe bestehend aus Cl, Br, F, I, OH, $NH_2$ und SH;
(h) cyclischem $C_3$- bis $C\text{-}_{25}$-Alkan oder -Alken umfassend ein bis drei Heteroatome ausgewählt aus der Gruppe bestehend aus O, N, Si und S und wahlweise mit mindestens einem Glied substituiert ausgewählt aus der Gruppe bestehend aus Cl, Br, F, I, OH, $NH_2$ und SH;
(j) unsubstituiertem $C_6$- bis $C\text{-}_{25}$-Aryl oder unsubstituiertem $C_6$- bis $C\text{-}_{25}$-Heteroaryl, das ein bis drei Heteroatome aufweist, die unabhängig aus der Gruppe ausgewählt sind bestehend aus O, N, Si und S; und
(k) substituiertem $C_6$- bis $C\text{-}_{25}$-Aryl oder substituiertem $C_6$- bis $C\text{-}_{25}$-Heteroaryl, das ein bis drei Heteroatome aufweist, die unabhängig aus der Gruppe ausgewählt sind bestehend aus O, N, Si und S; und wobei das substituierte Aryl oder substituierte Heteroaryl einen bis drei Substituenten aufweist unabhängig ausgewählt aus der Gruppe bestehend aus

(1) $-CH_3$, $-C_2H_5$ oder geradkettigem, verzweigtem oder cyclischem $C_3$-$C_{23}$-Alkan oder -Alken ist, wahlweise mit mindestens einem Glied substituiert ausgewählt aus der Gruppe bestehend aus Cl, Br, I, OH, $NH_2$ und SH;
(2) OH
(3) $NH_2$ und
(4) SH;

und wobei wahlweise mindestens zwei von $R^1$ $R^2$, $R^3$ $R^4$, $R^5$, $R^6$, $R^7$, $R^8$, $R^9$ und $R^{10}$ zusammen eine cyclische oder bicyclische Alkanyl- oder Alkenylgruppe bilden können.

**3.** Zusammensetzung auf der Basis von Polytrimethylenterephthalat nach Anspruch 1 wobei Q- aus der Gruppe ausgewählt ist bestehend aus Fluoralkylsulfonyl und Bis(fluoralkylsulfonyl)imidanionen.

**4.** Zusammensetzung auf der Basis von Polytrimethylenterephthalat nach Anspruch 2, wobei Q- aus der Gruppe ausgewählt ist bestehend aus Fluoralkylsulfonyl und Bis(fluoralkylsulfonyl)imidanionen.

**5.** Zusammensetzung auf der Basis von Polytrimethylenterephthalat nach Anspruch 1, wobei das Zusatzmittelpaket etwa 0,1 bis etwa 1 Gew.-% eines fluorierten Sulfonatsalzes (auf das Gesamtgewicht der Zusammensetzung bezogen) umfasst.

**6.** Zusammensetzung auf der Basis von Polytrimethylenterephthalat nach Anspruch 1, wobei das Zusatzmittelpaket etwa 0,5 bis etwa 1 Gew.-% eines fluorierten Sulfonatsalzes (auf das Gesamtgewicht der Zusammensetzung bezogen) umfaßt.

**7.** Zusammensetzung auf der Basis von Polytrimethylenterephthalat nach Anspruch 1, wobei das Polytrimethylenterephthalat ein Polytrimethylenterephthalathomopolymer ist.

**8.** Zusammensetzung auf der Basis von Polytrimethylenterephthalat nach Anspruch 1, wobei die Harzkomponente ein anderes Polymer umfasst.

**9.** Zusammensetzung auf der Basis von Polytrimethylenterephthalat nach Anspruch 8, wobei die Harzkomponente ein Polyethylenterephthalat umfasst.

**10.** Zusammensetzung auf der Basis von Polytrimethylenterephthalat nach Anspruch 8, wobei die Harzkomponente ein Polybutylenterephthalat umfasst.

**11.** Zusammensetzung auf der Basis von Polytrimethylenterephthalat nach Anspruch 8, wobei die Harzkomponente ein Nylon umfässt.

**12.** Zusammensetzung auf der Basis von Polytrimethylenterephthalat nach Anspruch 1, wobei das Zusatzmitteipaket ein $TiO_2$ umfasst.

**13.** Artikel, der aus der Zusammensetzung auf der Basis von Polytrimethylenterephthalat nach Anspruch1 hergestellt ist,

**14.** Artikel nach Anspruch 13, der in Form einer Faser vorliegt.

**Revendications**

**1.** Composition à base de poly(téréphtalate de triméthylène) comprenant :

(a) d'environ 75 à environ 99,9 % en pds d'un composant de résine (basé sur le poids total de la composition) comprenant au moins environ 70 % en pds d'un poly(téréphtalate de triméthylène) (basé sur le poids du composant résine), et (b) d'environ 0,02 à environ 25 % en pds d'un groupe d'additifs (basé sur le poids total de la composition), dans laquelle le groupe d'additifs comprend d'environ 0,02 à environ 5 % en pds d'un sel sulfonate fluoré comme additif ignifuge (basé sur le poids total de la composition) dans laquelle les sels sulfonate fluorés sont de la formule (I)

$$M^+Q^- \qquad (I)$$

dans laquelle $M^+$ est un cation choisi parmi le groupe constitué du lithium, du sodium, du potassium, du césium, du pyridinium, du pyridazinium, du pyrimidium, du pyrazinium, de l'imidazolium, du pyrazolium, du thiazolium, de l'oxazolium, du triazolium, du phosphium et de l'ammonium ; et
$Q^-$ est un anion choisi parmi le groupe constitué de la formule (II) et de la formule (III),

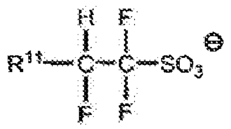

(II)

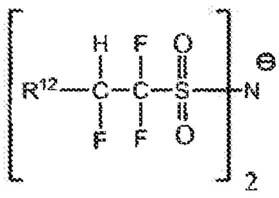

(III)

dans lesquelles chacun de $R^{11}$ et $R^{12}$ sont indépendamment choisis parmi le groupe constitué de :

(1) un groupe halogéno ;
(2) $-CH_3$, $-C_2H_5$ ou un groupe alcane ou alcène en $C_3$ à $C_{15}$ à chaîne linéaire ou ramifiée, optionnellement substitué par au moins un élément choisi parmi le groupe constitué de Cl, Br, I, OH, $NH_2$ et SH ;
(3) $-OCH_3$, $-OC_2H_5$ ou un groupe alcoxy en $C_3$ à $C_{15}$ à chaîne linéaire ou ramifiée, optionnellement substitué par au moins un d'élément choisi parmi le groupe constitué de Cl, Br, I, OH, $NH_2$ et SH ;
(4) un groupe fluoroalkyle en $C_1$ à $C_{15}$ à chaîne linéaire ou ramifiée, optionnellement substitué par au moins un élément choisi parmi le groupe constitué de Cl, Br, I, OH, $NH_2$ et SH ;
(5) un groupe fluoroalcoxy en $C_1$ à $C_{15}$ à chaîne linéaire ou ramifiée, optionnellement substitué par au moins un élément choisi parmi le groupe constitué de Cl, Br, I, OH, $NH_2$ et SH ;
(6) un groupe perfluoroalkyle en Cl à $C_{15}$ à chaîne linéaire ou ramifiée ; et
(7) un groupe perfluoroalcoxy en $C_1$ à $C_{15}$ à chaîne linéaire ou ramifiée.

**2.** Composition à base de poly(téréphtalate de triméthylène) selon la revendication 1, dans laquelle $M^+$ est choisi parmi le groupe constitué de :

(i) un cation pyridinium de la formule (IV)

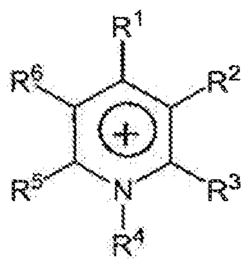

(IV)

(ii) un cation pyridazinium de la formule (V)

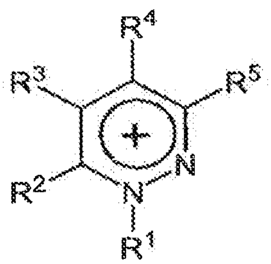

(V)

(iii) un cation pyrimidinium de la formule (VI)

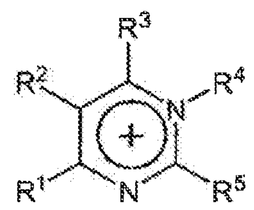

(VI)

(iv) un cation pyrazinium de la formule (VII)

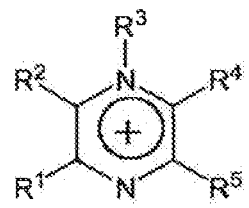

(VII)

(v) un cation imidazolium de la formule (VIII)

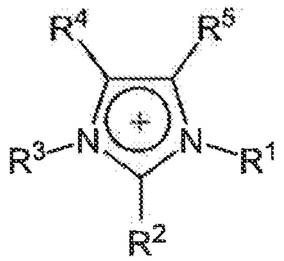

(VIII)

(vi) un cation pyrazolium de la formule (IX)

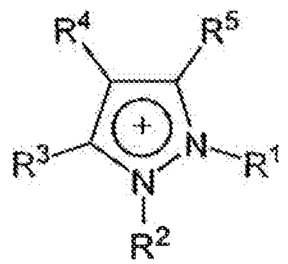

(IX)

(vii) un cation thiazolium de la formule (X)

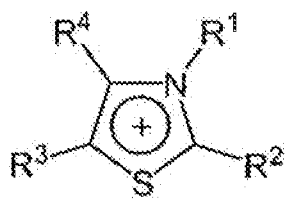

(X)

(viii) un cation oxaxolium de la formule (XI)

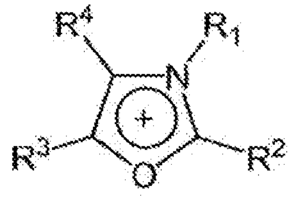

(XI)

(ix) un cation triazolium de la formule (XII)

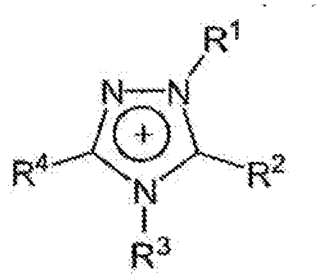

(XII)

(x) un cation phosphonium de la formule (XIII)

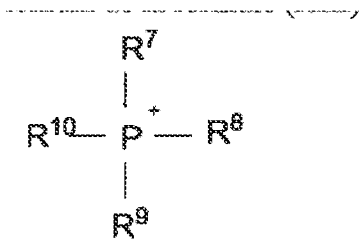

(XIII)

et (xi) un cation ammonium de la formule (XIV)

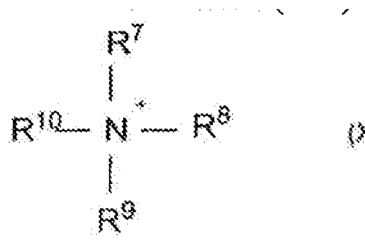

(XIV)

dans lesquelles :

$R^1$, $R^2$, $R^3$, $R^4$, $R^5$ et $R^6$ sont chacun indépendamment choisis parmi le groupe constitué de :

(a) un atome H
(b) un atome d'halogène
(c) $-CH_3$, $-C_2H_5$, ou un alcane ou un alcène en $C_3$ à $C_{25}$ à chaîne linéaire ou ramifiée ou cyclique, optionnellement substitué par au moins un élément choisi parmi le groupe constitué de Cl, Br, F, I, OH, $NH_2$ et SH ;
(d) un alcane ou un alcène en $C_3$ à $C_{25}$ cyclique comprenant un à trois hétéroatome(s) choisi(s) parmi le groupe constitué de O, N, Si, et S, et optionneliement substitué par au moins un élément choisi parmi le groupe constitué de Cl, Br, F, I, OH, $NH_2$ et SH ;
(e) un groupe aryle en $C_6$ à $C_{25}$ non substitué ou un groupe hétéroaryle en $C_6$ à $C_{25}$ non substitué ayant un à trois hétéroatome(s) indépendamment choisi(s) parmi le groupe constitué de O, N, Si et S ; et
(f) un groupe aryle en $C_6$ à $C_{25}$ substitué ou un groupe hétéroaryle en $C_6$ à $C_{25}$ substitué ayant un à trois hétéroatome(s) indépendamment choisi(s) parmi le groupe constitué de O, N, Si et S ; et dans lequel ledit groupe aryle substitué ou hétéroaryle substitué possède un à trois substituant(s) indépendamment choisi(s) parmi le groupe constitué de :

(1) $-CH_3$, $-C_2H_5$, ou un alcane ou un alcène en $C_3$ à $C_{25}$ à chaîne linéaire, ramifiée ou cyclique, optionnellement substitué par au moins un élément choisi parmi le groupe constitué de Cl, Br, F, I, OH, $NH_2$ et SH,
(2) OH,
(3) $NH_2$, et
(4)SH;

$R^7$, $R^8$, $R^9$ et $R^{10}$ sont chacun indépendamment choisis parmi le groupe constitué de:

(g) $-CH_3$, $-C_2H_5$ ou un groupe alcane ou alcène en $C_3$ à $C_{25}$ à chaîne linéaire, ramifiée ou cyclique, optionnellement substitué par au moins un élément choisi parmi le groupe constitué de Cl, Br, F, I, OH, $NH_2$ et SH ;
(h) un groupe alcane ou alcène en $C_3$ à $C_{25}$ cyclique comprenant un à trois hétéroatome(s) choisi(s) parmi le groupe constitué de O, N, Si et S, et optionnellement substitué par au moins un élément choisi parmi le groupe constitué de Cl, Br, F, I, OH, $NH_2$ et SH ;
(j) un groupe aryle en $C_6$ à $C_{25}$ non substitué ou hétéroaryle en $C_6$ à $C_{25}$ non substitué ayant un à trois hétéroatome(s) indépendamment choisi(s) parmi le groupe constitué de O, N, Si et S ; et
(k) un groupe aryle en $C_6$ à $C_{25}$ substitué ou hétéroaryle en $C_6$ à $C_{25}$ substitué ayant un à trois hétéroatome (s) indépendamment choisi(s) parmi le groupe constitué de O, N, Si et S ; et dans lequel ledit groupe aryle substitué ou hétéroaryle substitué a un à trois substituant(s) indépendamment choisi(s) parmi le groupe constitué de :

(1) $-CH_3$, $-C_2H_5$ ou un groupe alcane ou alcène en $C_3$ à $C_{25}$ à chaîne alinéaire, ramifiée ou cyclique, optionnellement substitué par au moins un élément choisi parmi le groupe constitué de Cl, Br, F, I, OH, $NH_2$ et SH,
(2) OH,
(3) $NH_2$, et
(4) SH ;

et dans laquelle optionnellement au moins deux parmi $R^1$, $R^2$, $R^3$, $R^4$, $R^5$, $R^6$, $R^7$, $R^8$, $R^9$ et $R^{10}$ peuvent conjointement former un groupe alcanyle ou alcényle cyclique ou bicyclique.

**3.** Composition à base de poly(téréphtalate de triméthylène) selon la revendication 1, dans laquelle Q est choisi parmi le groupe constitué d'anions fluoroalkyl sulfonyle et bis(fluoroalkylsulfonyl)imide.

**4.** Composition à base de poly(téréphtalate de triméthylène) selon la revendication 2, dans laquelle Q est choisi parmi le groupe constitué d'anions fluoroalkyl sulfonyle et bis(fluoroalkylsulfonyl)imide.

**5.** Composition à base de poly(téréphtalate de triméthylène) selon la revendication 1, dans laquelle le groupe d'additifs comprend d'environ 0,1 à environ 1 % en pds d'un sel sulfonate fluoré (basé sur le poids total de la composition).

**6.** Composition à base de poly(téréphtalate de triméthylene) selon la revendication 1, dans laquelle le groupe d'additifs comprend d'environ 0,5 à environ 1 % en pds d'un sel sulfonate fluoré (basé sur le poids total de la composition).

**7.** Composition à base de poly(téréphtalate de triméthylène) selon la revendication 1, dans laquelle le poly(téréphtalate de triméthylène) est un homopolymère de poly(téréphtalate de triméthylène).

**8.** Composition à base de poly(téréphtalate de triméthylène) selon la revendication 1, dans laquelle le composant de type résine comprend un autre polymère.

**9.** Composition à base de poly(téréphtalate de triméthylène) selon la revendication 8, dans laquelle le composant de type résine comprend un poly(téréphtalate d'éthylène).

**10.** Composition à base de poly(téréphtalate de triméthylène) selon la revendication 8, dans laquelle le composant de type résine comprend un poly(téréphtalate de butylène).

**11.** Composition à base de poly(téréphtalate de triméthylène) selon la revendication 8, dans laquelle le composant de

type résine comprend un nylon.

**12.** Composition à base de poly(téréphtalate de triméthylène) selon la revendication 1, dans laquelle le groupe d'additifs comprend un $TiO_2$.

**13.** Article fabriqué à partir de la composition à base de poly(téréphtalate de triméthylène) selon la revendication 1.

**14.** Article selon la revendication 13, qui se présente sous la forme d'une fibre.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 83423207 A
- US 83424807 A
- US 83426007 A
- US 834289 A
- GB 1473369 A
- US 4131594 A
- JP 6157880 A
- JP 3115195 B
- US 4203888 A
- EP 0955338 A
- EP 0955333 A
- JP 7310284 A
- US 20020120076 A1
- US 6277947 B
- US 6326456 B
- US 6657044 B
- US 6353062 B
- US 6538076 B
- US 20030220465 A1
- US 63891906 A
- US 5633362 A
- US 5686276 A
- US 5821092 A
- US 7038092 B
- US 7098368 B
- US 7084311 B
- US 20050069997 A1
- US 20060276670 A1
- US 20060276671 A1
- US 5847616 A
- US 6252111 B
- US 6399821 B
- US 2403207 A
- EP 047946 A
- US 7013628 B


### Non-patent literature cited in the description


- Source Apportionment of Atmospheric Particles,'' Characterization of Environmental Particles. **Currie, L. A.** the IUPAC Environmental Analytical Chemistry Series. Lewis Publishers, Inc, 1992, vol. I, 3-74
- **Hsieh, Y.** *Soil Sci. Soc. Am J.,* 1992, vol. 56 (460
- **Weber et al.** *J. Agric. Food Chem.,* 1997, vol. 45, 2942
- **A. Stark ; K. R. Seddon.** Kirk-Othmer Encyclopedia of Chemical Technology. John Wiley & Sons, Inc, 2007, vol. 26, 836-920
- **DesMarteau, D. ; Hu, L.Q.** *Inorg. Chem.,* 1993, vol. 32, 5007-5010
- **Caporiccio, G. et al.** *J. Fluor. Chem.,* 2004, vol. 125, 243-252
- **Lyapkalo, I.M.** *Tetrahedron,* 2006, vol. 62, 3137-3145